# EUROPEAN PATENT APPLICATION

(11) **EP 4 275 501 A1**
(43) Date of publication of application: **15.11.2023**
(21) Application number: 22173110.2
(22) Date of filing: 12.05.2022
(51) Int. Cl.: A22C 11/02

(54) **SYSTEM AND METHOD FOR PRODUCING SAUSAGE SHAPED PRODUCTS**

(71) Applicant: Poly-clip System GmbH & Co. KG, 65795 Hattersheim (DE)
(72) Inventor: Meyrahn, Joachim, 64390 Erzhausen (DE); Münker, Udo, 63505 Langenselbold (DE)
(74) Representative: Eisenführ Speiser

(57) **Abstract**

The present invention relates to a system (1000) for producing sausage-shaped products (S), like sausages, by filling a filling material into a tubular packaging casing (M), the system (1000) includes a clipping machine (CM) for producing sausage-shaped products (S). The clipping machine (CM) comprises a filling tube assembly (100) having at least a first filling tube (110) for feeding the filling material into the tubular packaging casing (M) stored on the filling tube (110) and closed at its first end, at least a first casing brake assembly (120), associated with the first filling tube (110), for applying a braking force to the tubular packaging casing (M) while being pulled-off from the first filling tube (110), and a control unit (CU) for controlling at least the clipping machine (CM). The system further includes a removal assembly (400) for removing at least a portion of the tubular packaging casing (M) from the at least first filling tube (110). The present invention relates to a method for removing a portion of a tubular packaging casing (M) from an at least first filling tube (110) of the clipping machine (CM).

## Description

The present invention relates to a system for producing sausage-shaped products, like sausages, by filling a filling material into a tubular packaging casing, the system includes at least a clipping machine for producing sausage-shaped products having a filling tube with a supply of tubular packaging casing stored thereon, and a removal device for removing a portion of the tubular packaging casing from said filling tube. The present invention further relates to a method for removing a portion of a tubular packaging casing from the filling tube of the clipping machine.

In practice, packaging machines, like clipping machines, are known, for producing sausage-shaped products, like sausages, in which filling material is fed into a tubular or bag-shaped packaging casing which is stored on a filling tube, and which is closed at its front end by a closure means, like a closure clip, i.e. the end of the packaging casing pointing in the feeding direction of the filling material. After a predetermined portion of filling material has been fed into the tubular or bag-shaped packaging casing, the filled tubular or bag-shaped packaging casing is gathered by gathering means, a plait-like portion being at least substantially free from filling material is formed thereto, and at least a first closure clip is placed and closed on said plait-like portion by a clipping device, for closing the portion of the tubular or bag-shaped packaging casing just filled.

Additionally, a second closure clip may be placed for closing the front end of the sausage-shaped product to be produced next. For severing the sausage-shaped product just produced from the remaining supply a tubular or bag-shaped packaging casing, a cutting device may be provided for cutting off the plait-like portion between the first and second closure clip. If it is intended to store sausage-shaped products on a rod-like element, like a smoking rod, e.g. for further treatment like cooking or smoking, a suspension element, like a suspension loop, may be provided and attached to one end of each of sausage-shaped products, or at one end of a chain of sausage-shaped products. The suspension element is fed to the clipping device and fixed to the respective end of the sausage-shaped product by the closure clip that closes the respective end of the sausage-shaped product. The sausage-shaped product is then discharged from the clipping machine by a discharge device, like a belt conveyor, and fed to a hanging line, where a predefined number of sausage-shaped products is suspended by their suspension elements onto a rod-like element. The rod-like element loaded with sausage-shaped products is fed out of the hanging line and placed for further treatment e.g. in a storage frame.

In these known clipping machines, tubular or packaging casing which may be provided as a supply in the form of a hollow stick of folded tubular casing material, is shifted onto the filling tube, by an operator onto the filling tube held in a specific refill position. In the production process, particularly, after the supply of tubular packaging casing just stored on the filling tube, is used up, i.e. after a certain number of sausage-shaped products has been produced with said supply of tubular packaging casing or tubular packaging casing supply, a portion of the tubular packaging casing remains on the filling tube. This portion or remainder of tubular packaging casing, usually, has a length that is not sufficient for a further sausage-shaped product to be produced. Accordingly, said remainder or portion of tubular packaging casing has to be removed from the filling tube by an operator prior a new supply of tubular packaging casing may be stored thereon. Removing said remainder or portion of tubular packaging casing from the filling tube by an operator, particularly in a clipping machine having a high production rate, requests the presence of said operator in regular, short intervals or permanently.

Moreover, removing said remainder or portion of tubular packaging casing is a monotonous and mentally exhausting work, such that the likelihood of operating errors is high, which leads to production losses and increasing downtimes.

Thus, it is an object of the present invention, to overcome the above-mentioned drawbacks, and to provide a system and a method for producing sausage-shaped products, which enable efficient production of sausage-shaped products and in which unnecessary downtimes are omitted.

According to the present invention, there is provided a system for producing sausage-shaped products, like sausages, by filling a filling material into a tubular packaging casing, the system includes a clipping machine for producing sausage-shaped products, wherein the clipping machine comprises a filling tube assembly having at least one first filling tube for feeding the filling material into the tubular packaging casing stored on the at least one filling tube and closed at its first end, at least one first casing brake assembly associated with the at least one first filling tube, for applying a braking force to the tubular packaging casing while being pulled-off from the at least one first filling tube, and a control unit for controlling at least the clipping machine. The system further includes a removal assembly for removing at least a portion of the tubular packaging casing from the at least first filling tube.

By means of said removal assembly, a portion of the tubular packaging casing may reliably be removed from the at least first filling tube, whereby operating errors and thus unnecessary downtimes of the system may be prevented.

In the present description, the portion of the tubular packaging casing to be removed by the removal device has to be understood preferably as being the remainder of the supply of tubular packaging casing stored on the filling tube, i.e. the end portion of the tubular packaging casing that may not be used for producing a sausage-shaped product, while being too short. Alternatively, the portion to be removed from the filling tube by the removal device may also be understood as the remainder after a predefined number of sausage-shaped products has been produced, or after a predefined length of the tubular packaging casing has been used up. The section of the tubular packaging casing can also be understood as that part of this sleeve, which remains on the filling tube after the casing has burst in the clipping machine.

It has further to be understood that a clipping machine for producing sausage-shaped products by filling a filling material into a tubular packaging casing may further comprise gathering means for gathering the filled tubular packaging casing and for forming a plait-like portion thereto, the gathering means including a first displacer unit and a second displacer unit, a clipping device having a first and a second closing tool being reversibly movable between an opened position and a closed position, for applying at least one closure means to the plait-like portion and closing said closure means when the closing tools are in their closed position, and a discharge device for discharging the sausage-shaped product just produced out of the clipping machine.

The supply of tubular packaging casing or tubular packaging casing supply advantageously may be provided in the form of hollow sticks of folded tubular packaging casing. These hollow casing sticks may easily and reliably be gripped by a gripper unit of a robotic device, provided for removing tubular packaging casings from at least one storage device accommodating several tubular packaging casings and for transferring them onto the filling tube.

In an advantageous embodiment, the removal assembly includes at least one engagement device for engaging the portion of the tubular packaging casing to be removed from the at least one first filling tube.

Such an engagement device enables a secure removal of the portion of the tubular packaging casing from the at least one first filling tube.

The at least one engagement device may be realized in different ways. In an advantageous embodiment, the engagement device includes a pusher element for pushing the portion of the tubular packaging casing from the at least one first filling tube. This allows a simple design of the engagement device.

In an alternative embodiment, the at least one engagement device includes at least one flap wheel including a plurality of flaps, and being reversibly movable towards the at least one first filling tube, for removing the portion of the tubular packaging casing from the at least one first filling tube. Such a flap wheel, particularly when including a plurality of flaps, which preferably are made of a resilient material and/or a material with a high coefficient of friction, does not damage any components or elements of the system, while securely removing the portion of the tubular packaging casing.

Further advantageously, the at least one engagement device may include a second flap wheel, for further enhancing the removal of the portion of the tubular packaging casing from the filling tube.

Of course, more than two flap wheels can also be provided.

The removal assembly may be carried out in various ways. In one preferred design, the removal assembly is formed by a robotic device, which may independently from further components of the production system be driven, but controlled in accordance with the operation of the system or components thereof.

In order to be able to remove the portion of tubular packaging casing from the at least one first filling tube, the gripper can grasp the portion and pull it off the filling tube. Additionally or alternatively, the gripper may be provided with at least one or several pusher units provided on the gripper elements to push the portion of tubular packaging casing off the at least one first filling tube.

In one embodiment of the system according to the present invention, it is preferred that the at least one first filling tube is movable at least between a filling position, in which filling material can be fed through the at least one first filling tube into the tubular packaging casing stored on the at least one first filling tube, and a refill position, in which a tubular packaging casing supply can be transferred onto the at least one first filling tube, and wherein the removal assembly is associated with the at least one first filling tube when being arranged in the refill position.

This design allows to execute the removal of the portion of the tubular packaging casing from the at least one filling tube as well as the refill of a supply of tubular packaging casing onto the at least one first filling tube in the refill position. Thereby, an efficient refill operation is enabled.

Further advantageously, the filling tube assembly includes at least one second filling tube and at least one second casing brake assembly associated with the at least one second filling tube, wherein, preferably, the at least one first filling tube is arranged in the filling position while the at least one second filling tube is arranged in the refill position, and wherein the removal assembly is associated with the at least one second filling tube when being arranged in the refill position. Thereby, sausage-shaped products may be produced using the at least one first filling tube being in the filling position, and, at the same time, the removal operation and the refill operation may be executed, such that possible interruptions of the production process may be reduced.

It should be noted that the teaching according to the invention can be realized both with only one first filling tubes or with several first filling tubes or with a combination of one or more first filling tubes and one or more second filling tubes.

The inventive system for producing sausage-shaped products may include further components and devices that increase the efficiency of the production process. In a preferred embodiment, the system further comprises a robotic device which can be used for different tasks. For example, the robotic device can be provided for transferring a supply of tubular packaging casing to the clipping machine, and a storage device for storing a tubular packaging casing supply, with the robotic device including at least one gripper unit for gripping a supply of tubular packaging casing provided by the storage device, and for transferring said supply of tubular packaging casing onto the at least one first filling tube of the clipping machine. The removal assembly may associated with the robotic device, such that the removal of the portion of tubular packaging casing from the at least one first filling tube may not only be coordinated with the movement of the robotic device, but may also be executed by said robotic device, whereby a precise removal operation and an exact coordination with the refill operation is enabled.

In order to prevent collisions between the removal assembly or elements thereof with components or elements of the production system, the at least one engagement device is associated with the at least one gripper unit. The engagement device may be a separate device attached to the gripper unit of the robotic device, and may e.g. include a separate drive unit for executing a removal movement, while the gripper unit is arranged in a respective position, e.g. close to a filling tube. Alternatively, the engagement device may be part of an element of the gripper unit, like an extension or a protrusion at the gripper unit, such that the gripper unit executes the removal movement with the engagement device being in contact with portion of the tubular packaging casing to be removed.

It may further be of advantage that the robotic device includes a further gripper unit, with the engagement device associated with said further gripper unit. In this embodiment, the gripper unit for gripping the supply of tubular packaging casing and the further gripper unit associated with the engagement device of the removal assembly may be designed as being exchangeable, such that each gripper unit is precisely designed for executing the respective operation. In this embodiment, the further gripper unit may form engagement device.

Accordingly, the system may include a receiving device for at least temporarily receiving one or both of the first and/or the further gripper unit. Thereby a secure exchange of the gripper units is enabled.

At least one receiving container may be provided for receiving portions of the tubular packaging casings stripped from the at least one first filling tube, in which container said portions are dropped or placed.

Further, according to the present invention, there is provided a method for producing sausage-shaped products, like sausages, by filling a filling material into a tubular packaging casing. This method can preferably be carried out on an inventive system as described above. The method comprises the steps of producing sausage-shaped products by filling a filling material into a tubular packaging casing stored on at least one first filling tube, and removing a portion of the tubular packaging casing from the at least one first filling tube by the removal assembly.

The inventive method further comprising the step of prior removing a portion of the tubular packaging casing from the at least one first filling tube, moving the at least first one filling tube from the filling position, in which filling material is fed into the tubular packaging casing, into the refill position, in which a supply of tubular packaging casing is transferred onto the at least one first filling tube.

Moreover, the inventive method comprising the step of reversibly moving the removal assembly towards the at least one first filling tube being arranged in the refill position.

Alternatively, the method according to the present invention further comprising the step of reversibly moving the removal assembly towards the at least one first filling tube while being moved towards the refill position.

Further according to the inventive method, the removal assembly is controlled by the control unit of the clipping machine. However, in the case that the inventive system includes a robotic device, and that said robotic device has an own control unit, it is also possible that the removal assembly is controlled by the control unit of the clipping machine and/or by the control unit of the robotic device.

The inventive method further comprises the step of refilling a supply of tubular packaging casing onto the at least one first filling tube in the refill position, after the portion of tubular casing has been removed from said filling tube by the removal assembly.

The inventive method thereby provides all advantages explained in conjunction with the inventive system for producing sausage-shaped products.

According to a further aspect of the present invention there is provided a system for producing sausage-shaped products, like sausages, by filling a filling material into a tubular packaging casing, the system includes i.a. a clipping machine for producing sausage-shaped products, a robotic device for at least transferring at least one supply of closure means, such as clips, or clip reel to the clipping machine, and a storage device for storing the at least one supply of closure means, the clipping machine comprises a filling tube assembly having at least one first filling tube for feeding the filling material into the tubular packaging casing stored on the filling tube and closed at its first end, at least one first casing brake assembly, associated with the at least one first filling tube, for applying a braking force to the tubular packaging casing while being pulled-off from the at least one first filling tube, holding means for holding the at least one supply of closure means, and a control unit for controlling at least the clipping machine.

The robotic device comprises at least one gripper unit for gripping the at least one supply of closure means provided by the storage device, and for transferring said at least one supply of closure means onto the holding means for the supply of closure means of the clipping machine.

The storage device comprises at least a first storage assembly in which at least one supply of closure means is provided for being transferred by the robotic device onto the holding means for the supply of closure means of the clipping machine.

The inventive system thereby enables the production of sausage-shaped products without unnecessary downtimes, particularly caused by the process of refilling the supply of closure means onto the holding means of the clipping machine. Furthermore, the inventive system enables a safe and reliable transfer of a supply of closure means from a storage device onto the holding means of a clipping machine.

The robotic device may be programmed and controlled based on the current positions of the storage device and the holding means of the clipping machine. The moving path of the robotic device between a take-up position, in which the supply of closure means is took up by the robotic device from the storage device, and a release position, in which the supply of closure means is released onto the holding means of the clipping machine, may be selected according to desired parameters, like the shortest or fastest moving path, and/or dependent on the periphery. Thus, a complex design or cumbersome alignment of the storage device and the clipping machine may be omitted.

Preferably, the supply of closure means or the clip reel has a hub with a longitudinal center axis and an inner surface provided with a coupling means being preferably arranged at least approximately in the center of the supply of closure means relative to the longitudinal axis.

Preferably, the holding means for the supply of closure means comprises at least one shaft for receiving at least one supply of closure means or clip reel, at least one abutment means against which the at least one supply of closure means or clip reel is mounted on the shaft abuts in one axial direction of the shaft, and at least one counter-coupling means cooperating with the coupling means of the supply of closure means or clip reel for reversibly fixing the supply of closure means or clip reel on the shaft in the other axial direction of the shaft.

Preferably, the coupling means of the supply of closure means or the clip reel comprises at least one rib at least approximately extending in circumferential direction for interaction with the counter-coupling means of the holding means.

This ensures the axial stabilization of the clip reel by having the counter-coupling means interact with the rib. The interaction stabilizes the clip reel, effectively hindering it from tilting and tipping over.

In some embodiments, the counter-coupling means of the shaft comprises biasing means, such that the counter-coupling means retract into the shaft when force is exerted onto the counter-coupling means and return out of the shaft when no force is exerted onto the counter-coupling means.

With this, a clip reel can be easily attached and removed from the reel holding means by having the counter-coupling means retract during the step of mounting and unmounting the respective clip reel. The counter-coupling means may comprise a tubular-like shaped body, or a cuboid-like shaped body or other types of bodies. The counter-coupling means may comprise a flat or non-flat surface at its front end, such as a preferably rounded cone.

By having a clip reel slide on the shaft of the reel holding means from the front side, the counter-coupling means are retracted into the shaft. When the reel is slid on, the counter-coupling means move back out of the shaft and lock the reel.

Preferably, the supply of closure means or the clip reels comprise radially extending outer walls defining a space for the closure means, and wherein one outer wall abuts against the abutment means of the holding means.

Preferably, the gripper unit of the robotic device is configured to grip the supply of closure means or the clip reels, preferably via a three-point gripper, which grips the supply of closure means or the clip reel at three angularly spaced points, preferably in an angle of 120°.

In some embodiments, the closure means of the supply of closure means or the clip reel comprises a substantially rigid covering, which is attached to the first closure means of the row of closure means. The rigid covering may me made of a material such as rubber of plastic. This rigid covering causes or at least supports the insertion of the beginning of the row of closure means into the clipping machine.

In some embodiments, the beginning of the row of closure means is pushed into the clipping machine via the robotic device. The row of closure means may also be inserted into the clipping machine with the aid of gravity. The clipping machine may also have an eyelet or a funnel, which helps guiding the row of closure means into the clipping machine. Preferably, the clipping machine is configured to automatically pull the row of closure means into the clipping machine.

Preferably, the covering of the closure means is pushed off the row of closure means, while inserting the same into the clipping machine. The covering may be pushed off via a bar or spring or the like.

In some embodiments, the robotic device includes a control unit, and wherein the control unit of the clipping machine and the control unit of the robotic device are interconnected such that the robotic device at least partially may be controlled by the control unit of the clipping machine and/or the clipping machine at least partially may be controlled by the robotic device.

According to this, the control unit of the clipping machine may generally start or stop the operation of the robotic device, whereas the control unit of the robotic device controls the process of transferring the at least one supply of closure means from the storage device towards the holding means of the clipping machine. Thereby, the control amount of the control unit of the clipping machine may be reduced. On the other hand, it is also possible that the control unit of the robotic device may affect the operation of the clipping machine, e.g. the clipping machine may be stopped in case of missing supply of closure means to be transferred onto the holding means of the clipping machine, or in case of any malfunction recognized by the robotic device.

Preferably, the robotic device includes at least a first sensor unit at least for detecting the position of the gripper unit relative to the storage device for storing the at least one supply of closure means, and/or the position of the gripper unit relative to the holding means of the clipping machine.

Such a sensor unit enables an exact positioning of the gripper unit for gripping the at least one supply of closure means and an exact positioning of the at least one supply of closure means onto the holding means of the clipping machine. Thereby, damages to the at least one supply of closure means or to components of the clipping machine, e.g. by accidental collisions, may be prevented, and production losses may be omitted. Various sensor units for detecting the position of the gripper unit may be used, like contact sensors or contactless sensors. In order to prevent damages, preferably, contactless sensors may be used, like optical sensors, inductive sensors or ultrasonic sensors.

Further advantages and preferred embodiments of the present invention will be described in the following together with the drawings listed below. The expressions "left", "right", "below" and "above" used in the following description, are referred to the drawings in an alignment such that the reference numbers and the notation of the figures used can be read in normal orientation.
- Fig. 1:: is a schematic view showing the principal design of a clipping machine for producing sausage-shaped products;
- Fig. 2:: is a perspective view to the front side of a system according to the present invention for producing sausage-shaped products, comprising a clipping machine as in Fig. 1, a robotic device shown in a pick-up position, and a removal assembly;
- Fig. 3:: is a perspective view to the rear side of the system according to Fig. 2, with the robotic device in the take-up position;
- Fig. 4:: a perspective view to the front side of a system according to the present invention for producing sausage-shaped products, comprising a clipping machine as in Fig. 1, a robotic device shown in a pick-up position, and a further embodiment of a removal assembly;
- Fig. 5:: is a perspective view to the rear side of the system according to Fig. 4, with the robotic device in an allocation position;
- Fig. 6:: is a perspective view to the gripper unit of the robotic device in the opened position;
- Fig. 7:: is a perspective view to the gripper unit according to Fig. 6 in the closed position;
- Fig. 8a:: is a schematic view of a first embodiment of an engagement device for a removal assembly according to the present invention; and
- Fig. 8b:: is a schematic view of a second embodiment of an engagement device for a removal assembly according to the present invention.

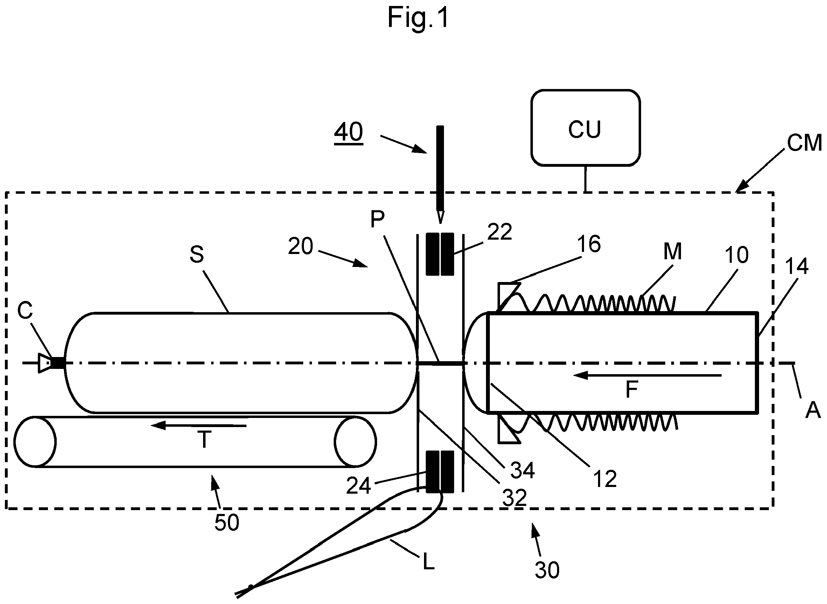

A clipping machine 1 for producing sausage-shaped products S, like sausages, which contain a flowable filling material in a tubular packaging casing supply M, is shown schematically in Fig. 1. Clipping machine 1 comprises a filling tube 10 with a longitudinally and horizontally extending central axis A, having at its left end 12 a discharge opening for discharging the filling material and at its right end 14 a feeding opening for feeding the filling material into filling tube 10 in a feeding direction F to the discharge opening of filling tube 10, for example by a feeding pump of a filler. Moreover, a casing brake assembly 16 is arranged on and coaxially with filling tube 10 in the region of left end 12 of filling tube 10. Filling tube 10 is made of a suitable material, like stainless steel.

A tubular packaging casing supply M made of a thin sheet material is stored on filling tube 10 in a folded and shirred manner like a concertina. From tubular packaging casing supply M, tubular packaging casing material is pulled-off during the process of producing sausage-shaped products S, in particular by the feeding pressure, as the filling material is filled into tubular packaging casing M. Casing brake assembly 16 provides a braking force for allowing a controlled pulling-off of tubular packaging casing M during the filling process.

Clipping machine 1 further comprises gathering means 20 for gathering a filled tubular packaging casing M and forming a plait-like portion P thereto, and a clipping device 30 for closing the filled portion of tubular packaging casing M by applying closure means, like closure clips C, to plait-like portion P. These components are all arranged downstream filling tube 10.

As can be inferred from Fig. 1, clipping device 30 is positioned immediately downstream left end 12 of filling tube 10, and coaxially aligned to filling tube 10. Clipping device 30 comprises a first and a second clipping tool 32, 34 formed by a punch 32 and a die 34. It has to be noted that punch 32 and die 34 may apply and close a single closure clip C for closing just filled tubular packaging casing M, or may apply and close two closure clips C at the same time, a first closure clip C for closing the rear end of just filled tubular packaging casing M for forming a sausage-shaped product S, and a second closure clip C for closing the front end of a tubular packaging casing M subsequently to be filled.

Gathering means 20 include a first displacer unit 22 and a second displacer unit 24, wherein first displacer unit 22 is positioned downstream second displacer unit 34. First and second clipping tools 32, 34 of clipping device 30 may be positioned between first and second displacer units 22, 24, at least for applying and closing one or two closure clips C to plait-like portion P. First displacer unit 22 can reversibly be moved parallel to feeding direction F of the filling material, for forming plait-like portion P of a desired length.

If it is intended to store sausage-shaped products S on a rod-like element, like a smoking rod, e.g. for further processing, like cooking or smoking, a suspension element L, like a suspension loop, may be provided and attached to one end of each of sausage-shaped products S, or at one end of a chain of sausage-shaped products S. Suspension element L may be fed to one of closing tools 32, 34, and may be fixed to the respective end of sausage-shaped product S by means of closure clip C that closes said end of sausage-shaped product S.

For separating a sausage-shaped product S just produced from the remaining tubular packaging casing supply M stored on filling tube 10, a cutting device 40 may be provided. Said cutting device 40 cuts tubular packaging casing M upstream closure clip C that closes the just filled portion of tubular packaging casing M. In case that two closure clips C have been applied to plait-like portion P by clipping device 30, cutting device 40 cuts plait-like portion P between said two closure clips C.

For discharging a sausage-shaped product S just produced from clipping machine 1 in a transportation direction T being at least substantially the same as feeding direction F, a discharge device 50 is arranged downstream clipping device 30, which may be a belt conveyor comprising a conveyor belt and guide rollers.

For storing sausage-shaped products S on a rod-like element, suspension element L is caught by a catching device (not shown), like a catching needle, which guides suspension element L towards the rod-like element.

Clipping machine 1 further comprises a control unit 5 for controlling clipping machine 1, and particularly, the components of clipping machine 1, like first and second clipping tool 32, 34 of clipping device 30, and first and second displacer unit 22, 24 of gathering means 20.

Control unit 5 may also control additional components or machines, which are not part of clipping machine 1, but being involved in the production process. In particular, control unit 5 may control the drive units of said additional components or machines, like a metal detector, which may be provided in the region of filling tube 10, for detecting metal parts in the filling material while fed into tubular packaging casing M, a label feeding device for feeding labels to clipping device 30 for attaching labels to the sausage-shaped product S, a filler for feeding filling material through filling tube 10 of clipping machine 1, or a hanging line for suspending the sausage-shaped products S produced by clipping machine 1 on a rod-like element. These and other additional components and machines may be coupled to control unit CU and controlled by control unit CU, at least partially, e.g. to be adjusted to each other and/or to the kind of sausage-shaped product S to be produced by clipping machine CM.

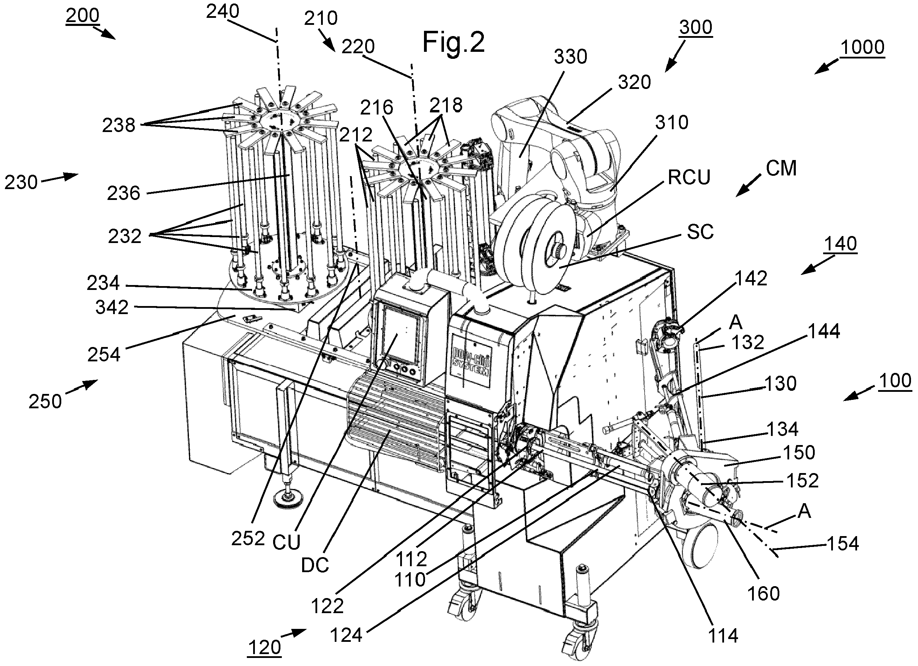

Fig. 2 is a perspective view to the front side of a system 1000 according to the present invention, for producing sausage-shaped products S.

As it can be seen in Fig. 2, system 1000 includes a clipping machine CM having a control unit CU. Clipping machine CM comprises a clipping device and gathering means, both not visible in Fig. 2, but designed as explained in conjunction with Fig. 1. Clipping machine CM further comprises a discharge device DC and a filling tube assembly 100.

As it further can be seen in Fig. 2, a supply SC of closure clips C is provided above clipping machine CM. The supply of closure clips C, or clip supply SC, includes two reels with closure clips C stored thereon in the form of chains of clips. From the clip supply SC, the chains of clips are guided towards the closing region of clipping machine CM.

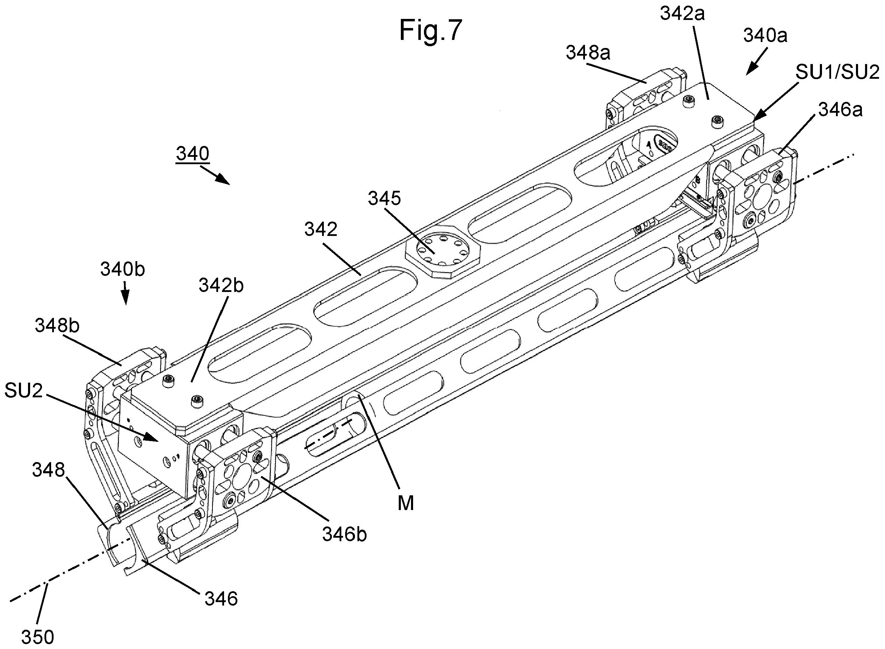

Filling tube assembly 100 comprises a first filling tube 110 having a first end 112 and a second end 114, a first casing brake assembly 120 associated with first filling tube 110, a second filling tube 130 having a first end 132 and a second end 134, and a casing brake assembly 140 associated with second filling tube 130. First and second filling tubes 110, 130 are pivotally coupled to a revolver plate 150 by their second ends 114, 134 via a respective hinge (cf. Fig. 7).

First filling tube 110 faces with its first end 112 in feeding direction F towards the closing region of clipping machine CM, in which the clipping device and the gathering means are arranged. In the arrangement of Fig. 2, first filling tube 110 is in the filling position.

Second filling tube 130 faces with its first end 132 to the rear side of clipping machine CM. Second filling tube 130 is in the refill opposition, in which tubular packaging casing supply M may be arranged on second filling tube 130.

A first casing brake assembly 120 is associated with first filling tube 110 and includes a first casing brake unit 122 positioned in the region of first end 112 of first filling tube 110, and is pivotally coupled to revolver plate 150 by a first telescopic casing brake holder unit 124. First casing brake holder unit 124 is designed such that first casing brake unit 122 may linearly reversibly shifted along first filling tube 110 onto its first end 112 and pivoted away from first end 112 of first filling tube 110. First casing brake holder 124 includes a telescopic guidance and a telescopic drive for extending and retracting the telescopic guidance. The telescopic drive is a linear drive, particularly, a piston/cylinder drive. A pivot drive unit, also in the form of a piston/cylinder drive, is provided for pivoting first casing brake assembly 120 relative to first filling tube 110 about a pivot point at which first casing brake assembly 120 is coupled to revolver plate 150.

A second casing brake assembly 140 includes a second casing brake unit 142 pivotally coupled to revolver plate 150 by a second telescopic casing brake holder unit 144, for linearly reversibly shifting second casing brake assembly 140 along second filling tube 130 onto its first end 132, and for pivoting second casing brake unit 142 away from first end 132 of second filling tube 130. Second casing brake holder unit 142 is of similar design as first casing brake holder unit, and includes a telescopic guidance and a telescopic drive for extending and retracting the telescopic guidance. The telescopic drive is a piston/cylinder drive. A pivot drive unit, also in the form of a piston/cylinder drive, is provided for pivoting second casing brake assembly 140 relative to second filling tube 130 about a pivot point at which second casing brake assembly 140 is coupled to revolver plate 150.

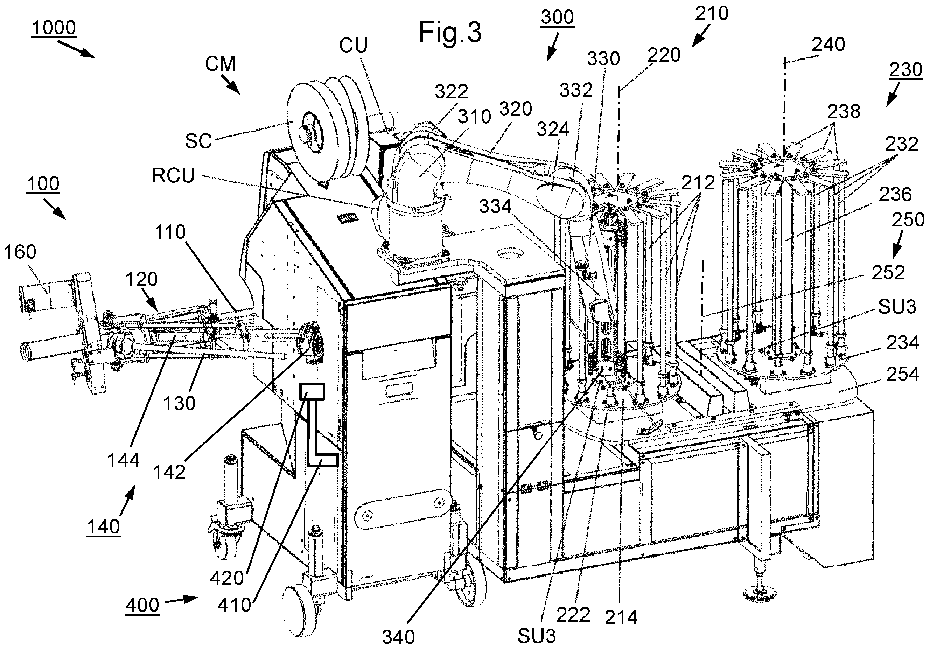

The telescopic guidance of first casing brake holder 124 is in the retracted position, in which first casing brake unit 122 is positioned on first end 112 of first filling tube 110, whereas the telescopic guidance of second casing brake holder 144 is in the extended position, in which second casing brake unit 142 is moved away from first end 132 of second filling tube 130 (cf. Fig. 3).

The pivot movement of filling tubes 110, 130 and casing brake assemblies 120, 140 is executed in a common plane, which is at least approximately horizontally with respect to clipping machine CM.

Filling tube assembly 100 further includes a drive device 152 including an electric motor and a suitable transmission or gear unit for rotating revolver plate 150 about a rotation axis 154. Rotation axis 154 and filling tubes 110, 130 are arranged in a common plane that is aligned at least approximately horizontally, when one of filling tubes 110; 130 is in the refill position and the respective other filling tube 130; 110 is in the filling position.

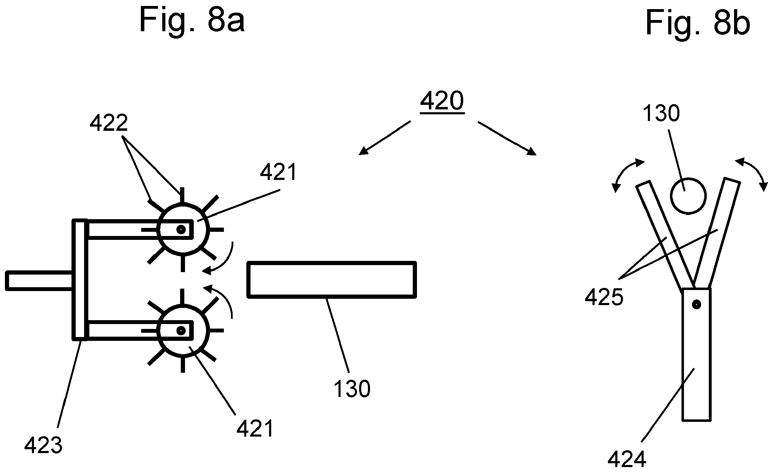

Filling tube 110 positioned in the filling position may pivoted laterally outwardly in the common plane of rotary axis 154, from the filling position as shown in Figs. 2, 7 and 8 into a lateral position as indicated in dotted lines in Figs. 7 and 8. In the lateral position and the refill position, filling tubes 110, 130 are arranged at least approximately equiangular to rotation axis 154.

As it further can be seen in Fig. 2, filling tube assembly 100 is provided with a feeding socket 160 fixed to revolver plate 150 and facing a way from clipping machine CM. Feeding socket 160 is coaxially aligned with central axis A of filling tube 130 when in the filling position. A feeding device, like a filler, for feeding filling material, like sausage meat, to clipping machine CM, may be coupled via feeding socket 160 to clipping machine CM.

As explained in conjunction with the principal design of clipping machine CM shown in Fig. 1, tubular packaging casing supply M is made of a thin sheet of tubular material that is folded like a concertina. Tubular packaging casing supply M thereby forms a hollow stick of folded tubular casing, which may be transferred onto filling tube 110, 130. Tubular packaging casing M may further be closed at one end by a closure clip C, which forms the front end of the first sausage-shaped product S to be produced with this tubular packaging casing supply M. For handling tubular packaging casing supply M, it is of advantage that said tubular packaging casing supply M has an inherent stability, for preventing tubular packaging casing supply M from unintentional unfolding, and that is sufficient for transferring tubular packaging casing supply M at least from a storage device onto filling tube 110, 130 of clipping machine CM.

System 1000 for producing sausage-shaped products S further comprises a storage device 200 for storing a plurality of tubular packaging casing supplies M to be loaded onto first and second filling tubes 110, 130 when arranged in the refill position. Storage device 200 as shown in Figs. 2 and 3 comprises a first storage assembly 210 and a second storage assembly 230.

First storage assembly 210 includes a plurality of vertically arranged receiving pins 212 of equal length, that are fixed on the upper side of a circular rotation plate 214 by their lower ends, and on a circle concentrically to the center of rotation plate 214. A central post 216 is mounted to rotation plate 214 with its lower end, and is coaxially aligned to a rotation axis 220 of rotation plate 214. Rotation axis 220 extends vertically to rotation plate 214 and through its center. At the upper end of central post216, retaining elements 218 are arranged. Retaining elements 218 are made of an elastic material, like rubber, have an approximately rectangular shape and extend radially outwardly from central post 216 towards the upper ends of receiving pins 212, such that their outer ends are laid up with pretension on the upper ends of receiving pins 212. Storage device 210 further includes a rotary drive 222 coupled to the lower side of rotation plate 214, for rotating first storage assembly 210 about rotation axis 220.

Second storage assembly 230 is of identical design as first storage assembly 210, and includes a rotation plate 234 with a vertical rotation axis 240 and a plurality of receiving pins 232 arranged vertically with their lower ends attached to rotation plate 234, and on a circle concentrically to the center of rotation plate 234. A central post 236 is arranged at the center of rotation plate 234 and coaxially aligned to rotation axis 240 of rotation plate 234 and through its center. At the upper end of central post 236, retaining elements 238 are arranged. Retaining elements 238 that are also made of an elastic material, like rubber, have a rectangular shape and extend radially outwardly towards the upper ends of receiving pins 312, and are laid up with pretension on the upper ends of receiving pins 312. Second storage assembly 230 is rotatable about rotation axis 240 by a rotary drive 242 mounted to the lower side of rotation plate 234.

In Fig. 2, first storage assembly 210 is positioned in an unloading position, in which tubular packaging casing supply M is unloaded from first storage assembly 210 to be transferred onto second filling tube 130 arranged in the refill position, and storage assembly 230 is in a loading position, in which tubular packaging casing supply M is loaded onto storage assembly 230.

Storage device 200 further includes a rotation assembly 250 for rotating first and second storage assemblies 210, 230 about a rotation axis 252. First and second storage assemblies 210, 230 are mounted on a common rotation table 254 on the same height and with rotation axes 220, 240 are aligned parallel to each other and to rotation axis 252. Rotation table 254 of rotation assembly 250 is rotated about rotation axis 252 by a rotation mechanism arranged below rotation table 254.

System 1000 for producing sausage-shaped products S further comprises a robotic device 300 having a control unit RCU for controlling the movement of robotic device 300. Robotic device 300 has a base 310, a first arm 320 having a first end 322 and a second end 324. First arm 320 is pivotally coupled to base 310 by its first end 322. Robotic device 300 further has a second arm 330 with a first end 332 and a second end 334. Second arm 330 is pivotally coupled to second end 324 of first arm 320 by its first end 332 (cf. Fig. 3). Base 310 further includes a rotary drive mechanism for being rotated about a vertical rotation axis together with first and second arms 320, 330 relative to clipping machine CM.

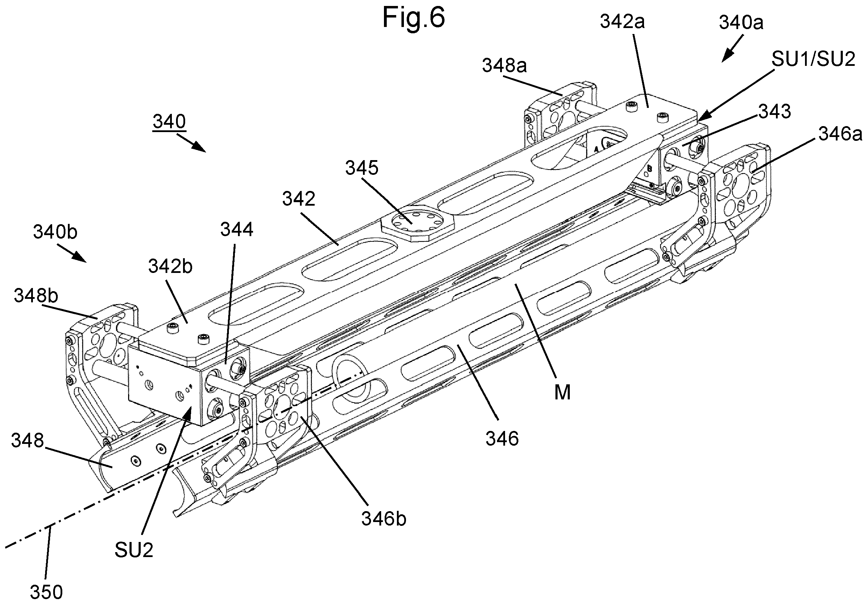

As can be seen in Fig. 3, which is a perspective view to the rear side of the system according to Fig. 2, a gripper unit 340 for gripping tubular packaging casing supply M is mounted at second end 334 of second arm 330. In Fig. 3, gripper unit 340 is in the take-up position, in which tubular packaging casing supply M provided by first storage assembly 210 and hold ready on a receiving pin 212. Said receiving pin 212, from which tubular packaging casing supply M is took up by gripper unit 340, is arranged in the provision position. The design and function of gripper unit 340 will be explained in detail in conjunction with Figs. 6 and 7 below.

Control unit RCU of robotic device 300 according to the embodiment of Fig. 3, is mounted to base 310 of robotic device 300. Robotic device 300 is mounted to the framework of clipping machine CM by its base 310. Alternatively, a separate framework for robotic device 300 may be provided, which is arranged in a defined position relative to clipping machine CM, or which is fixedly coupled to the framework of clipping machine CM.

As further can be seen in Fig. 3, a removal assembly 400 is mounted to clipping machine CM of system 1000. It has to be noted that the provision of several removal assemblies are also possible.

Removal assembly 400, which in Fig 3 is only schematically shown, and embodiments of which will be explained in more detail in conjunction with Figs. 8a and 8b, includes a fixing unit 410 for fixing removal assembly 400 to clipping machine CM, and an engagement device 420 for engaging the portion of tubular packaging casing to be removed from second filling tube 130 that in Fig. 3 is in the refill position.

Removal assembly 400 is arranged at the rear edge of clipping machine CM, that faces towards filling tube assembly 100, such that engagement device 420 is positioned close to first end 132 of second filling tube 130 in the refill position.

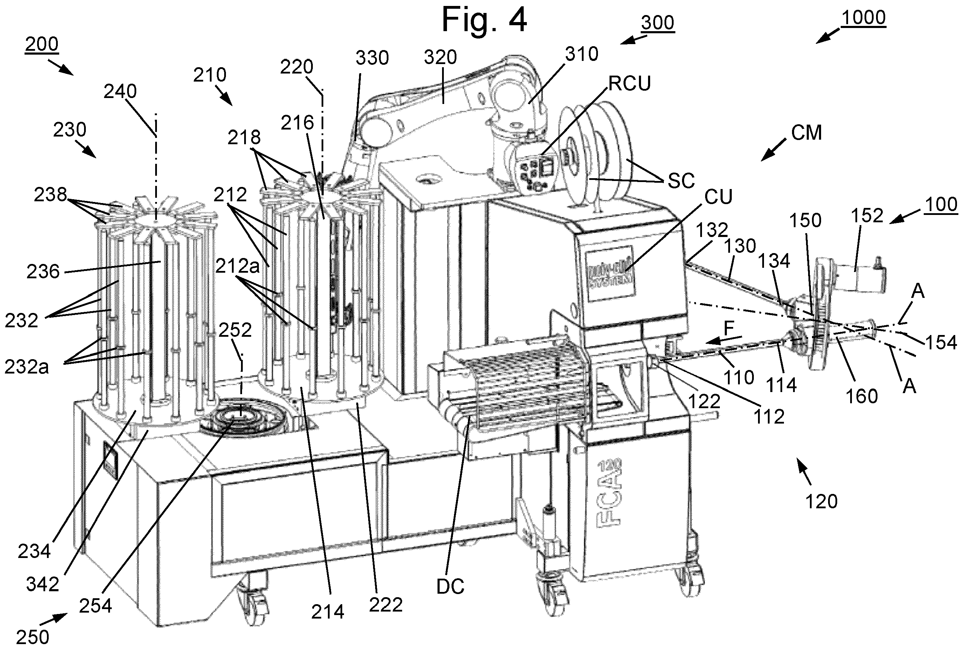

Fig. 4 shows a perspective view to the front side of a further embodiment of system 1000 for producing sausage-shaped products S, which includes a clipping machine CM. Clipping machine CM according to Fig. 4 includes a clipping device and gathering means, both as explained in conjunction with Figs. 1 to 3, a discharge device DC and a filling tube assembly 100. Clipping machine CM of system 1000 is in principle constructed and operates in the same way as clipping machine 1 described above in connection with Fig. 1. Clipping machine CM of system 1000 includes a filling tube assembly 100 comprises a first filling tube 110 having a first end 112, 30 and a second end 114, a first casing brake assembly 120 associated with first filling tube 110, a second filling tube 130 having a first end 132 and a second end 134, and a second casing brake assembly 140 associated with second filling tube 130. First and second filling tubes 110, 130 are pivotally coupled to a revolver plate 150 by their second ends 114, 134 via a respective hinge.

First filling tube 110faces with its first end 112 towards the closing region of clipping machine CM, in which clipping device and gathering means are arranged, and in filling direction F. In the arrangement of Fig. 2, first filling tube 110 is in the filling position.

Second filling tube 130 faces with its first end 132 to the rear side of clipping machine CM. Second filling tube 130 is in the refill opposition, in which tubular packaging casing supply M may be arranged or put on second filling tube 130.

First casing brake assembly 120 includes a casing brake unit 122 positioned in the region of first end 112 of first filling tube 110. A casing brake holder unit (not shown) is designed such that casing brake unit 122 when in the filling position is held in position at first end 112 and secured against unintentional shifting along first filling tube 110, particularly, by the feeding pressure of the filling material or the pull-off force from the tubular casing material acting on casing brake unit 122. First casing brake holder may have the form of a fork into which first casing brake unit 122 engages when in the filling position. Alternatively, an elastic element, like a spring, or any other suitable holding or retaining element may be provided, for securing first casing brake unit 122 in its position on first filling tube 110 may be provided.

Second casing brake assembly 140 includes a second casing brake unit 142 positioned in the region of first end 132 of second filling tube 130. It has to be understood that the casing brake holder also secures casing brake unknit 142 of second casing brake assembly 140 against unintentional shifting along second filling tube 130 when in the filling position.

The pivot movement of filling tubes 110, 130 and casing brake assemblies 120, 140 is executed in a common plane, which is at least approximately horizontally with respect to clipping machine CM.

Filling tube assembly 100 further includes a drive device 152 including a motor, preferably an electric motor and a suitable transmission or gear unit for rotating revolver plate 150 about a rotation axis 154. Rotation axis 154 and filling tubes 110, 130 are arranged in a common plane that is aligned at least approximately horizontally, when one of filling tubes 110; 130 is in the refill position and the respective other filling tube 130; 110 is in the filling position.

First filling tube 110 may pivoted laterally outwardly in the common plane of rotary axis 154, from the filling position as shown in Fig. 2, into a lateral position as indicated in Fig. 3. In these positions, filling tubes 110, 130 are arranged at least approximately equiangular to rotation axis 154. Rotation axis 154 includes an acute angle with filling tube axis A.

As explained in conjunction with the principal design of clipping machine 1 shown in Fig. 1, tubular packaging casing supply M is made of a thin sheet of tubular material that is folded and shirred, like a concertina. Tubular packaging casing supply M thereby forms a hollow stick of folded and shirred tubular casing material, which may be transferred from a storage device 200, onto filling tube 110, 130. Tubular packaging casing supply M is preferably closed at one end by a closure clip C, which forms the front end of the first sausage-shaped product S to be produced with this tubular packaging casing supply M. However, it is also possible that a closure clip C, which forms the front end of the first sausage-shaped product S to be produced, is applied to the front end of tubular packaging casing supply M by the clipping device of clipping machine CM, immediately before starting the filling process. For handling tubular packaging casing supply M, it may be of advantage that said tubular packaging casing supply M has an inherent stability that is sufficient for transferring tubular packaging casing supply M at least from a storage device onto filling tube 110, 130 of clipping machine CM.

System 1000 for producing sausage-shaped products S further comprises storage device 200 for storing at least one, preferably a plurality of tubular packaging casing supplies M to be loaded onto filling tube 110, 130 when arranged in the refill position.

Storage device 200 according to the embodiment shown in Fig. 4 is of similar construction and function as explained with the embodiment shown in Figs 2 and 3, and thus, for a detailed description, reference is made to the respective description of storage device 200 in conjunction with Figs. 2 and 3.

Like system 1000 shown in Figs. 2 and 3, also system 1000 according to Fig. 4 comprises a robotic device 300 that is of similar design and function, such that also in this regard, reference is made to the respective description of robotic device 300 in conjunction with Figs. 2 and 3.

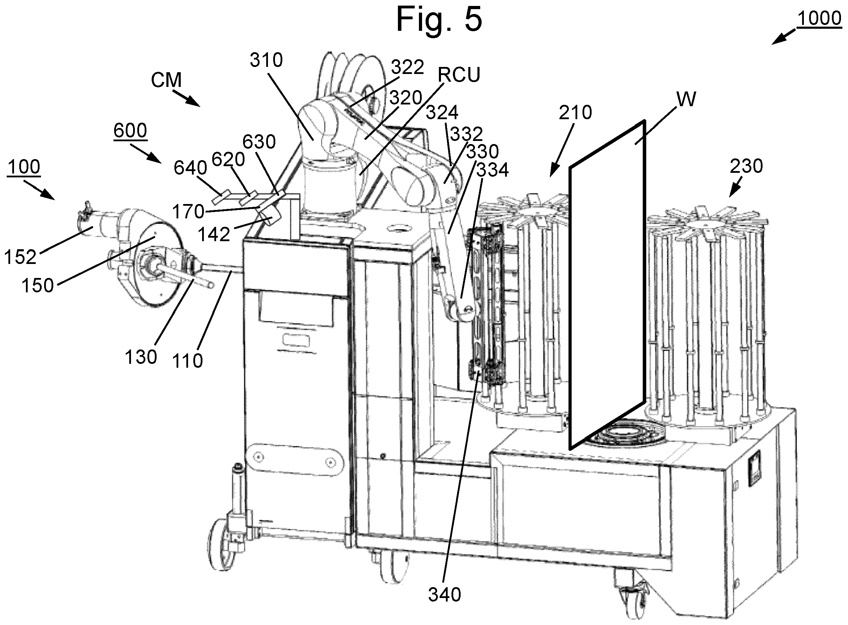

In addition, and as it can particularly be seen in Fig. 5, system 1000 further includes a receiving device 600 for receiving either first gripper unit 340 or a second gripper unit 170 for gripping one of casing brake units 122, 142 of first or second casing brake assemblies 120, 140.

In Fig. 5, second casing brake unit 142 gripped by second gripper unit 170 is received by receiving device 600. For receiving or accommodating first and /or second gripper units 340, 170, receiving device 600 is provided with a first holding unit 620 and a second holding unit 630. First holding unit 620 is provided for holding and securing first gripper unit 340 in receiving device 600, and second holding unit holds and secures second gripper unit 170 (cf. Fig. 4) in receiving device 600.

For holding and securing first and second gripper units 340, 170 in receiving device 600, holding units 620, 630 may include suitable for-fit or force-fit elements or assemblies, like magnetic elements, tongue-and-groove joints or clamping elements for securing first and second gripper units in the receiving device, or combinations thereof.

Furthermore, for enabling robotic device 300 to exchange first and second gripper units 340, 170, gripper units 340, 170 may reversibly be coupled to second end 334 of second arm 330 of robotic device 300 by a respective coupling mechanism.

Said coupling mechanism may include a bayonet joint, which provides a mechanical connection between the robotic device and the first and second gripper units as well as a fluid connection, for connecting the drive devices of the gripper units with respective fluid sources. The coupling mechanism may also provide electric connections, like sensor connections or, if present, electric connections for possible electric drive devices.

Furthermore, receiving device 600 includes a third holding unit 640 for receiving and holding a further gripper unit (not shown), which may be of approximately similar design as gripper unit 340 of robotic device 300. Said further gripper unit, which forms an engagement device 420 of removal assembly 400, for engaging the portion of tubular packaging casing to be removed from second filling tube 130 in the refill position, may include gripper elements that are reversibly movable between a closed position and an opened position, and which are designed to grip a portion of tubular packaging casing M to be removed from third filling tube 130 in the refill position, prior a tubular packaging casing supply M is shifted thereon by robotic device 300.

Said gripper unit also includes a coupling mechanism as described above, for being connectable and disconnectable to and from robotic device 300, and for at least temporary be stored in receiving device 600.

Receiving device 600 may be provided with a sensor arrangement (not shown), that may detect the presence or absence of first and/or second gripper units 340 and/or the further gripper unit, 170 in first, second and third holding units 620, 630, 640. The signal from this sensor arrangement may be used for controlling at least robotic device 300. Robotic device 300 may e.g. be stopped in case that both gripper units are placed in receiving device 600, or in case that no gripper unit 340, 170 is placed in receiving device 600. Furthermore, it is also possible that the sensor arrangement is able to detect whether the first or the second gripper unit 340, 170 is received by receiving device 600, and put out a respective signal whether the incorrect gripper unit is in the receiving device.

As further can be seen in Fig. 5, a partition wall W is arranged between first and second storage assemblies 210, 230, for separating the operation range of robotic device 300, in which first storage device 210 is arranged while robotic device takes up tubular packaging casing supply M therefrom, from an operation range of an operator or a further robotic device, in which tubular packaging casing supply M is refilled onto receiving pins 232 of second storage assembly 230. It has to be noted, that partition wall W may also be provided in system 1000 of Figs. 2 and 3.

Partition wall W may be a solid wall element. Alternatively, partition wall may be realizes by a sensor arrangement that creates a so called light curtain or light screen, which may detect a person or an element extending there through, and which may than output a respective signal to system 1000 or control unit of clipping machine CM or control unit RCU of robotic device 300, such that the system 1000 or components thereof, like robotic device 300, may be stopped. Partition wall W is arranged on the common rotation table of first and second storage assemblies 210, 230, such that it rotates together with first and second storage assemblies 210, 230.

Fig. 6 is a perspective view to gripper unit 640 of robotic device 300 in the opened position.

Gripper unit 340 has a first end 340a and a second end 340b. Gripper unit 340 comprises a longitudinally extending, essentially rectangular base structure or base plate 342 with a first end 342a that coincides with first end 340a of gripper unit 340, and a second end 342b that coincides with second end 340b of gripper 25 unit 340. On the lower side of the base structure or base plate 342 (according to Fig. 6), and in the regions of its first end 342a, a first drive assembly 343 is arranged that includes two piston/cylinder drives with the pistons extending in a plane parallel to the plane of base plate 342 and at least approximately vertical to its longitudinal extension. A second drive assembly 344, which is identically designed to first drive assembly 343, is mounted to base plate 342 in the regions of its second end 342b, and with the pistons of the piston/cylinder drives extending at least approximately vertical to the longitudinal extension of base plate 340 and in the same plane as the pistons of first drive assembly 343. At the outer ends of the pistons of the piston/cylinder drives of first and second drive assemblies 343, 344, are mounted on brackets 346a, 346b, 348a, 348b. Brackets 346a, 346b, 348a, 348b are angled and fixed with one end to the pistons of the piston/cylinder drives such that their other ends face downwards from base plate 342, and brackets 346a, 348a; 346b, 348b at first and second ends 342a, 342b of base plate 342 are directed to each other.

Gripper unit 340 is provided with a first gripper element 346 and a second gripper element 348, each in the form of an angled bar having a V-shaped cross section and a length corresponding to the length of base plate 342. First and second gripper elements 346, 348 are mounted to brackets 346a, 348a; 346b, 348b such that they are aligned parallel to each other and with the open side of the "V" facing to each other. First and second gripper elements 346, 348 may reversibly be moved by first and second drive assemblies 343, 344 between an opened position, as shown in Fig. 6, and a closed position, as shown in Fig. 7. First and second gripper elements 346, 348 are aligned parallel and equidistant to a central axis or gripping axis 350 there between. In the closed position, a tubular packaging casing supply M is grasped by first and second gripper elements 346, 348, and held coaxially to gripping axis 350.

First and second gripper elements 346, 348 are reversibly moved between the opened position and the closed position by first and second drive assemblies 343,344, which include piston/cylinder drives. The pistons of said piston/cylinder drives do not only drive first and second gripper elements 346, 348, but do also provide linear guidance or linear support, such that the alignment of first and second gripper elements 346, 348 is maintained during the whole process.

As further can be seen in Figs. 6 and 7, at the upper side of base plate 342 and 30 approximately centrally thereon, a connecting unit 345 is arranged, for connecting gripper unit 340 to second end 334 of second arm 330 of robotic device 300. At second end 334 of second arm 330 of robotic device 300, a corresponding connecting unit is arranged, for establishing at least a mechanical connection between second arm 330 and gripper unit 330. Additionally, it is also possible the said connection units enable electrical and/or pneumatic/hydraulic connections to sensor units SU 1/SU2, which will be explained in detail below, or first and second drive assemblies 343, 344, respectively.

As mentioned in conjunction with Figs. 4 and 5, engagement device 420 may be designed as a gripper unit similar to gripper unit 430. Accordingly, said gripper unit or engagement device 420 may include two gripper elements, which are reversibly movable between an opened position, and a closed position, driven by one or more respective drive means, similar to drive assemblies 343, 344 of gripper unit 340, and may include respective piston/cylinder drives. Furthermore, also sensor units may be provided for detecting engagement device 420 in the opened position and/or the closed position, as well as its position relative to the respective filling tube 110, 130 in the refill position, for enabling a correct positioning of engagement device 420 for the removal operation.

Figs. 8a and 8b show two embodiments of an engagement device 420 of a removal assembly 400 according to the present invention.

Engagement device 420 according to Fig. 8a includes two flap wheels 421, which comprise a plurality of flaps 422 arranged at the outer surface of the wheel hub, and which extend radially outwardly. An at least approximately fork-shaped holder 423 has two parallel tines at the free end of which flap wheels 421 are arranged. Flap wheels 421 are aligned in a common plane with their rotation axis parallel to each other, and with a gap between flap wheels 421 corresponding to, preferably smaller than the diameter of filling tubes 110, 130. Flap wheels 421 are drive in opposite directions as indicated by the arrows in Fig. 8a.

Accordingly, when guided towards the respective end of the filling tube in the refill position, like second filling tube 130 in Fig. 8a, the rotation of flat wheels 421 engage the portion of tubular packaging casing to be removed from filling tube 130 and pull said portion from filling tube 130.

The second embodiment of engagement device 420 according to Fig. 8b includes two gripper elements 425 in the form of longitudinally extending bars or blades, which are coupled with one of their ends to one end to a holder 424. Gripper elements 425 are pivotally mounted to holder 424 such that gripper elements may reversibly pivoted about a pivot axis, like a scissor. Gripper elements 425 may reversibly be pivoted between an opened position as shown in Fig. 8b, and a closed position, in which gripper elements are arranged at least approximately parallel to each other. A drive unit for reversibly driving gripper elements 425 may include a piston/cylinder drive and respective pivot levers or an eccentric drive for realizing the pivot movement of gripper elements 425.

As can be seen in Fig. 8b, engagement device 420 is arranged in a plane vertically to the longitudinal extension or central axis of filling tube 130 and in front of filling tube 130, such that filling tube 130 faces to the opening formed between gripper elements 425, when in the opened position.

For producing sausage-shaped products S in system 1000, tubular packaging casing M, stored on first filling tube 110 in the form of tubular packaging casing supply M and closed at its front end by a closure clip C, is filled with filling material which is fed through first filling tube 110 of filling tube assembly 100 into tubular 30 packaging casing M in feeding direction F. Thereby, tubular packaging casing M is pulled off from first filling tube 110 by the feeding pressure of the filling material.

First casing brake assembly 120 exerts a braking force onto tubular packaging casing M while being pulled off from first filling tube 110. After a predetermined portion of filling material is fed into tubular packaging casing M, filled tubular packaging casing M is gathered and a plait-like portion is formed to the gathered portion of tubular casing M by the gathering means. Two closure clips C are applied to the plait-like portion and closed by the clipping device, a first closure clip C for closing the just filled tubular packaging casing M for forming a sausage-shaped product S and a second closure clip C for closing the front end of sausage-shaped product S subsequently to be produced. A suspension element L may be provided and attached to one end of sausage-shaped product S by means of one of a closure clips C. For severing the just produced sausage-shaped product S from the remaining tubular packaging casing supply M, the plait-like portion is cut between the two closure clips C, and the sausage-shaped product S just produced may be discharged from clipping machine CM by discharge device DC in transportation direction T.

Suspension element L of sausage-shaped product S just produced, is caught by a catching and may be guided towards a hanging line, arranged downstream discharge device DC, for being suspended on a like element for further treatment.

After the tubular packaging casing supply M on first filling tube 110 is used up, filling tube assembly 100 is rotated about rotation axis 154 of revolver plate 150 and about an angle of at least approximately 180°. During this rotational movement of filling tube assembly 100, first filling tube 110 is transferred into the refill position and second filling tube 130, with a tubular packaging casing supply M stored thereon, is moved towards the filling position.

Thereafter, second casing brake unit 142 is shifted onto first end 132 of filling tube 130, and the production of sausage-shaped products S may be continued. During the production process, a further tubular packaging casing supply M is transferred towards first filling tube 110 now in the refill position, and is stored thereon.

Refill of tubular packaging casing supply M onto second filling tube 130 arranged in the refill position, is executed by robotic device 300, which takes up a tubular packaging casing supply M from first storage assembly 210 of storage device 200, being in the unloading position, and transfers this tubular packaging casing supply M onto second filling tube 130 being arranged in the refill position.

The moving path of robotic device 300 may be programmed by an operator and transferred to control unit RCU of robotic device 300, or may directly be programmed into control unit RCU via a respective interface. Alternatively, robotic device 300 may manually be guided by an operator along a desired moving path that in the meantime is stored in control unit RCU. In all these cases, the movement of robotic device 300 is controlled by control unit RCU. Alternatively, the positions and the moving path of robotic device 300 may be stored in control unit CU of clipping machine CM, such that control unit CU of clipping machine CM may also control the movement of robotic device 300.

For refilling tubular packaging casing supply M onto second filling tube 130 arranged in the refill position, second casing brake assembly 140, and particularly, casing brake unit 142 of second casing brake assembly 140, has to be removed from second filling tube 130, either by pivoting second casing brake assembly 140 away from filling tube 130 (cf. Figs. 2, 3), or by gripping and removing casing brake unit 142 by gripper unit 170 (cf. Figs. 4, 5).

Prior refilling a supply of tubular packaging casing or tubular packaging casing supply M onto second filling tube 130, a remainder or portion of tubular packaging casing that has not been used up, and which has been left on second filling tube 130, or first filling tube 110, respectively, has to be removed from second filling tube 130 by removal device 400.

In the embodiment of removal device 400 shown in Figs 2 and 3, removal device 400 operates independently from robotic device 300.

That means, robotic device 300 is moved into a position, like the take-up position, in which removal device 400 may grasp the remainder or portion of tubular packaging casing that has been left on second filling tube 130, and remove said portion of tubular packaging casing from second filling tube 130, without being affected by robotic device 300.

Removal device 400, and particularly, engagement device 420 is moved towards second filling tube 130 in the refill position, such that engagement device is positioned relative to second filling tube as shown in Figs. 8a or 8b. Thereafter, engagement device 420, in the embodiment of Fig. 8a, is moved towards filling tube 130, such that flap wheels 421 engage the remainder of tubular packaging casing on filling tube 130.

At the same time, shortly bevor or after this position is reached, flap wheels 421 are driven for pulling the remainder or portion of tubular packaging casing from second filling tube 130.

When using an engagement device 420 according to Fig. 8b, said engagement device is positioned in front of filling tube 130 in the refill position, with gripper elements 425 in their opened position (cf. Fig. 8b), such that the portion of tubular packaging casing to be removed from second filling tube 130 is positioned between gripper elements 425. Gripper elements 425 are than moved into their closed position, in which the portion of tubular packaging casing is grasped, and engagement device 420 is moved away from second filling tube 130.

In general, prior removing the portion of tubular packaging casing from second filling tube 130, second casing brake unit 142 is pulled off from second filling tube 130. However, in order to prevent the portion of tubular packaging casing to be removed from accidentally falling off from filling tube 130, it is also possible that second casing brake unit 142 remains on second filling tube 130 during the removal operation. In this case, engagement device 420 grasps the front end of the portion of tubular packaging casing, which extends in filling direction out of second casing brake unit 142.

A sensor arrangement coupled to engagement device 420 may detect the position of engagement device 420 relative to filling tube 130, and may also monitor the removal process, such that, based on the signals of said sensor arrangement, the movement of removal assembly 400 as well as the removal operation may be controlled. Respective signals may be sent to control unit CU of clipping machine CM and/or to control unit RCU of robotic device, which identify e.g. the start or stop of the removal operation and the position of removal assembly 400.

A container or box (not shown) may be provided in a position close to engagement device 420, such that the portion of tubular casing pulled off from second filling tube 130, may fall into said container or box.

In the embodiment of system 100 according to Figs. 4 and 5, in which a removal assembly 400 includes an engagement device 420 in the form of a separate gripper unit that may reversibly mounted to robotic device 300, said gripper unit or engagement device 420 is stored in third holding unit 640 of receiving device 600.

For removing the remainder or portion of tubular packaging casing from second filling tube 130, robotic device 300 places gripper unit 340 in holding unit 620 of receiving device 600 and couples engagement device 420 to second end 334 of second arm 330. Thereafter, robotic device 300 moves engagement device 420 towards second filling tube 130 in the refill position, and removes the portion of tubular casing from second filling tube 130 by positioning engagement device 420 with the gripper elements in their opened position such that said portion of tubular casing is placed between the gripper elements, and moves the gripper elements into their closed position. Then, engagement device 420 is moved away from second filling tube 130, e.g. towards a container or box, into which said portion of tubular casing may fall. After that, engagement device 420 is placed in holding unit 640 of receiving device 600, and disconnected from robotic device 300.

Also this removal operation may be executed before or after second casing brake unit 142 has been removed from second filling tube 130.

After the removal of the portion of tubular casing and the second casing brake unit 142 from second filling tube 130, robotic device 300 with gripper unit 340 coupled thereto, is moved into the take-up position (cf. Figs. 3, 5). In the take-up position, first and second gripper elements 346, 348 of gripper unit 340, which are in their opened position, are aligned parallel and laterally to tubular packaging casing supply M stored on receiving pin 212 of first storage assembly 210 in the provision position. Gripper unit 340 is aligned to receiving pin 212 such that the first end 340a of gripper unit 340 and the upper end of receiving pin 212 are at least approximately arranged at the same height. In this position, gripping axis 350, at least approximately, coincides with the central axis of receiving pin 212. Then, first and second drive assemblies 343, 344 are activated such that first and second gripper elements 346, 348 are moved into their closed position for grasping tubular packaging casing supply M.

Each of tubular packaging casing supplies M arranged on receiving pins 212 of first storage assembly 210, or on receiving pins 232 of second storage assembly 230, respectively, is aligned with its upper end, which may already be closed by a closure clip C, to the upper end of respective receiving pins 212, 232. In this position, retaining elements 218 of first storage assembly 210, and retaining elements 238 of second storage assembly 230, respectively, are laid-up with pretension on the upper ends of receiving pins 212, 232, and thereby, abut on the upper ends of tubular packaging casing supplies M stored thereon. Retaining elements 218, 238 thereby prevent tubular packaging casing supply M stored on receiving pins 212, 232 from unintentional unfolding and exceeding upwardly from receiving pins 212, 232 of first and second storage assemblies 210, 230.

For removing tubular packaging casing supply M from receiving pin 212, robotic device 300 moves gripper unit 340 vertically upwards along receiving pin 212, and about a length that corresponds to the length of base plate 342 of gripper unit 340. Thereby, it is ensured that tubular packaging casing M is completely removed from receiving pin 212, and collisions between gripper unit 340 and first storage assembly 210 are securely prevented. The tension applied to the upper end of tubular packaging casing supply M by retaining elements 218, 238 is selected such that tubular packaging casing supply M is securely held on retaining pins 212, 232, but may be removed from receiving pins 212, 232 without being damaged by retaining elements 218, 238, which are pushed or pivoted aside or upwards, preferably by gripper unit 340.

Robotic device 300 is moved further towards the refill position of second filling tube 130. Gripper unit 340 is positioned with its second end 340b immediately in front of first end 132 of second filling tube 130, with gripping axis 350 being coaxially aligned with central axis A of second filling tube 130.

Robotic device 300 is then moved into the release position by shifting gripper unit 340 along central axis A of filling tube 130, whereby tubular packaging casing supply M is transferred onto second filling tube 130. Tubular packaging casing supply M is shifted onto second filling tube 130 such that its end that is closed by a closure clip C, which is the upper end when arranged on receiving pins 212, 232 of first and second storage assemblies 210, 230, abuts first end 132 of second filling tube 130.

In this situation, a retainer device (not shown) may be activated which abuts against tubular packaging casing supply M on second filling tube 130 in the region of its first end 132, such that tubular packaging casing supply M is prevented from unfolding.

Gripper unit 340 is moved into its opened position for releasing tubular packaging casing supply M onto second filling tube 130, and first gripper unit 340 is removed from second filling tube 130.

Subsequently, robotic device 300 moves away from second filling tube 130 such that second casing brake unit 142 may be shifted onto second filling tube 130, either by pivoting second casing brake assembly 140 towards second filling tube 130 (cf. Figs. 2, 3), or by gripping and moving second casing brake unit 142 by gripper unit 170 onto second filling tube 130 (cf. Figs. 4, 5).

In order to continue the production of sausage-shaped products S, filling tube assembly 100 is rotated about rotation axis 154 of revolver plate 150, such that first filling tube 110 is transferred into the refill position, and second filling tube 130 is moved into the lateral position in front of clipping machine CM. Second filling tube 130 with tubular packaging casing supply M thereon is pivoted into the filling position, and the production of sausage-shaped products S may be continued.

Refill of tubular packaging casing supply M onto first filling tube 110 is executed in the same manner as described in conjunction with second filling tube 130.

In the embodiment of system 1000 according to Figs. 2 and 3, removal device 400 is shown as being mounted to clipping machine CM. In this embodiment, removal assembly includes a respective drive assembly, for moving engagement device 420 towards second filling tube 130 in the refill position. Said drive assembly may include any suitable drive device, like a linear drive device including a piston/cylinder drive and/or a linear guidance along which engagement device 420 may reversibly be shifted towards second filling tube 130.

Moreover, in conjunction with Figs. 4 and 5, one embodiment of removal assembly 400 has been described as including a gripper unit that forms engagement device 420. It has to be noted that engagement device 420 may also be coupled to an existing gripper unit, like gripper unit s 170, 340. In this case, engagement device 420 may be designed as shown in Figs 8a, 8b, and may be connected to the drive assemblies of said gripper unit s 170, 340 for driving flap wheels 421 or for reversibly moving gripper elements 425 between their opened and closed positions.

Furthermore, in a simple design, removal device 400 may include a pivot lever forming engagement device 420, which pivots along second filling tube 130 in the refill position, or crosswise in front of first filling tube 130, thereby engaging the portion of tubular packaging casing for removing said portion of tubular packaging casing from second filling tube 130.

It has further to be noted that removal assembly 400 may be provided in the form of a robotic device, similar to robotic device 300. Accordingly, removal device 400 may include a robotic arm at the free end of which an engagement device 420 is arranged.

Moreover, removal device 400 may be placed in any suitable position, e.g. at the front side or at the rear side of clipping machine CM, or at filling tube assembly 100.

## Claims

1. A system (1000) for producing sausage-shaped products (S), like sausages, by filling a filling material into a tubular packaging casing (M), the system (1000) includes a clipping machine (CM) for producing sausage-shaped products (S), wherein the clipping machine (CM) comprises:
- a filling tube assembly (100) having at least one first filling tube (110) for feeding the filling material into the tubular packaging casing (M) stored on the at least one filling tube (110) and closed at its first end,
- at least one first casing brake assembly (120), associated with the at least one first filling tube (110), for applying a braking force to the tubular packaging casing (M) while being pulled-off from the at least one first filling tube (110), and
- a control unit (CU) for controlling at least the clipping machine (CM);
the system further includes a removal assembly (400) for removing at least a portion of the tubular packaging casing (M) from the at least one first filling tube (110).

2. The system (1000) according to claim 1,
wherein the removal assembly (400) includes at least one engagement device (420) for engaging the portion of the tubular packaging casing (M) to be removed from the at least one first filling tube (110).

3. The system (1000) according to claim 2,
wherein the engagement device (420) includes a pusher element for pushing the portion of the tubular packaging casing (M) from the at least one first filling tube (110).

4. The system (1000) according to claim 2,
wherein the engagement device (420) includes at least one flap wheel (421) including a plurality of flaps (422), and being reversibly movable towards the at least one first filling tube (110), for removing the portion of the tubular packaging casing (M) from the at least one first filling tube (110).

5. The system (1000) according to any of claims 1 to 4,
wherein the removal assembly (400) is formed by a robotic device.

6. The system (1000) according to any of claims 1 to 5,
wherein the at least one first filling tube (110) is movable at least between a filling position, in which filling material can be fed through the at least one first filling tube (110) into the tubular packaging casing (M) stored on the at least one first filling tube (110), and a refill position, in which a tubular packaging casing supply (M) can be transferred onto the at least one first filling tube (110), and wherein the removal assembly (400) is associated with the at least one first filling tube (110) when being arranged in the refill position.

7. The system (1000) according to any of claims 1 to 6,
wherein the filling tube assembly (100) includes at least one second filling tube (130) and at least one second casing brake assembly (140) associated with the at least one second filling tube (130), wherein, preferably, the at least one first filling tube (110) is arranged in the filling position while the at least one second filling tube (130) is arranged in the refill position, and wherein the removal assembly 400) is associated with the at least one second filling tube (130) when being arranged in the refill position.

8. The system (1000) according to any of claims 1 to 5,
further comprising a robotic device (300) for transferring a supply of tubular packaging casing (M) to the clipping machine (CM), and a storage device (200) for storing a tubular packaging casing supply (M), and including at least one gripper unit (340) for gripping a supply of tubular packaging casing (M) provided by the storage device (200), and for transferring said supply of tubular packaging casing (M) onto the at least one first filling tube (110) of the clipping machine (CM), wherein the removal assembly (400) is associated with the robotic device (300).

9. The system (1000) according to claim 8,
wherein the engagement device (420) is associated with the at least one gripper unit (340).

10. The system (1000) according to claim 8,
wherein the robotic device (300) includes a further gripper unit, with the engagement device (420) associated with said further gripper unit.

11. A method for producing sausage-shaped products (S), like sausages, by filling a filling material into a tubular packaging casing (M), the system (1000) includes a clipping machine (CM) for producing sausage-shaped products (S); the method comprises the steps of:
producing sausage-shaped products by filling a filling material into a tubular packaging casing (M) stored on at least one first filling tube (110); and
removing a portion of the tubular packaging casing (M) from the at least one first filling tube (110) by the removal assembly (400).

12. The method according to claim 11,
further comprising the step of:
prior removing a portion of the tubular packaging casing (M) from the at least one first filling tube (110), moving the at least one first filling tube (110) from the filling position, in which filling material is fed into the tubular packaging casing (M), into the refill position, in which a supply of tubular packaging casing (M) is transferred onto the at least one first filling tube (110).

13. The method according to claim 11 or 12,
further comprising the step of:
reversibly moving the removal assembly (400) towards the at least one first filling tube (110) being arranged in the refill position.

14. The method according to claim 11 or 12,
further comprising the step of:
reversibly moving the removal assembly (400) towards the at least one first filling tube (110) while being moved towards the refill position.

15. The method according to any of claims 11 to 14,
wherein the removal assembly (400) is controlled by the control unit (CU) of the clipping machine (CM).
